Europäisches Patentamt

**European Patent Office**

Office européen des brevets

(11) Veröffentlichungsnummer: **0 321 676**

**A1**

(12) # EUROPÄISCHE PATENTANMELDUNG

(21) Anmeldenummer: 88117680.4

(51) Int. Cl.⁴ **A61G 5/04 , B60L 3/08**

(22) Anmeldetag: 24.10.88

(30) Priorität: 22.12.87 DE 3743647
03.06.88 DE 3818893

(43) Veröffentlichungstag der Anmeldung:
28.06.89 Patentblatt 89/26

(84) Benannte Vertragsstaaten:
**AT CH DE FR GB LI NL SE**

(71) Anmelder: **ORTOPEDIA GMBH
Salzredder 30
D-2300 Kiel 14(DE)**

(72) Erfinder: **Gersing, Eberhard, Dr.
Michaelisweg 8
D-3400 Göttingen(DE)**
Erfinder: **Köster, Reinhard
Gaffelweg 7
D-2300 Kiel-Schilksee(DE)**
Erfinder: **Chant, John B.
1, High Street Market Harborough
Leicestershire, LE16 8ST(GB)**

(74) Vertreter: **Henkel, Feiler, Hänzel & Partner
Möhlstrasse 37
D-8000 München 80(DE)**

(54) **Elektrofahrzeug.**

(57) Das Elektrofahrzeug, das inbesondere als Dreirad-Roller ausgebildet ist, besitzt an dem lenkbaren Vorderrad (5) einen Winkelstellungsdetektor (11, 12, 13), der die Relativstellung einer Lenkachse (9) zum Fahrgestell (1) mißt. Das Ausgangssignal des Winkelstellungsdetektors (11) ist mit einer Antriebseinheit (4) derart verknüpft, daß die Fahrgeschwindigkeit mit zunehmendem Lenkwinkel verringert wird. Auf diese Weise wird die Kippgefahr auch bei ruckartigen Lenkbewegungen ausgeschaltet.

EP 0 321 676 A1

Fig.1

# Elektrofahrzeug

Die Erfindung betrifft ein Elektrofahrzeug, insbesondere einen Dreiradroller, mit einem Fahrgestell, einer Antriebseinheit und einem über eine Radgabel lenkbaren Vorderrad, wobei eine mit der Radgabel verbundene Lenkachse annähernd senkrecht stehend in einer mit dem Fahrgestell verbundenen Lagerhülse gelagert ist.

Derartige Fahrzeuge sind insbesondere dafür gedacht, älteren Leuten die Fortbewegung zu erleichtern. Solche älteren Leute leiden oft an allgemeiner Schwäche oder an bestimmten Behinderungen, die ihnen das Gehen beschwerlich machen. Vielfach möchten diese Personen jedoch keinen Krankenfahrstuhl benutzen, um nicht als krank oder schwerbehindert angesehen zu werden. Solche Leute ziehen deshalb ein kleines Elektrofahrzeug vor, wobei dieses Fahrzeug vorzugsweise mit drei Rädern ausgestattet wird, so daß es kompakt und billig wird.

Ein Problem bei einem derartigen Fahrzeug ist darin zu sehen, daß die Reaktionen älterer Leute meist langsam sind und daß bestimmte Krankheiten, wie Athritis, ein gefühlvolles Lenken schwierig machen. Andererseits neigt aber gerade ein dreirädriges Fahrzeug zur Instabilität oder sogar zum Kippen, wenn es ruckartige Lenkbewegungen erfährt.

Aufgabe der Erfindung ist es deshalb, ein Elektrofahrzeug der eingangs genannten Art zu schaffen, bei dem die Stabilität und die Sicherheit gegen Umkippen auch bei schnellen Lenkbewegungen gewährleistet ist.

Erfindungsgemäß wird diese Aufgabe dadurch gelöst, daß im Bereich der Lagerhülse und der Lenkachse ein Winkelstellungsdetektor angeordnet ist, der die Relativstellung zwischen Lenkachse und Lagerhülse mißt und dessen Ausgangssignal mit der Antriebseinheit derart verknüpft ist, daß die Fahrgeschwindigkeit mit zunehmendem Lenkeinschlag vermindert wird.

In einer vorteilhaften Ausgestaltung der Erfindung enthält der Winkelstellungsdetektor ein Potentiometer, dessen Mittelabgriff mittels eines durch eine Relativdrehung der Lenkachse betätigbaren Abtastelementes verstellbar ist. Dabei kann das Abtastelement ein in Längsrichtung verstellbarer Abtaststift sein, der mit einem relativ zu ihm verdrehbaren Kurvenelement zusammenwirkt. Ist das Kurvenelement eine Nockenscheibe, deren Ebene senkrecht zur Lenkachse steht, so ist der Abtaststift zweckmäßigerweise senkrecht zu dieser Lenkachse verstellbar. In einer anderen Ausführungsform kann das Kurvenelement auch kronenförmig mit im wesentlichen vertikal vorstehenden Nocken gestaltet sein, wobei dann der Abtaststift parallel zur Lenkachse verstellbar ist. Je nach Anwendungsfall kann es dabei zweckmäßig sein, das Kurvenelement mit der Lenkachse und das Potentiometer mit dem Abtaststift mit der Lagerhülse bzw. dem Fahrgestell zu verbinden. Von Vorteil kann jedoch auch die Umkehrung der Anordnung sein, wobei dann das Kurvenelement mit der verschwenkbaren Lenkachse und das Potentiometer mit dem feststehenden Fahrgestell verbunden ist. In diesem letzteren Fall ist die Verlegung von Signalleitungen von dem Potentiometer zur Antriebseinheit einfacher, da beide Teile fest miteinander verbunden sind.

Auch andere Ausgestaltungen des Winkelstellungsdetektors sind denkbar. Dieser Detektor kann einen Sensor enthalten, der nach jedem beliebigen physikalischen Prinzip arbeitet.

Beispielsweise kann er eines der folgenden Sensorelemente mit analogem Ausgangssignal aufweisen: Ein Potentiometer, beispielsweise ein Drehpotentiometer, ein piezoresistives Element, einen zugempfindlichen Sensor, beispielsweise eine Saite, einen auf elektrische Felder ansprechenden Sensor, einen kapazitiven Sensor, einen auf magnetische Felder ansprechenden Sensor, eine Feldplatte, einen Hallgenerator, einen auf magnetische Induktion ansprechenden Sensor, einen auf eine Variation der Induktivität ansprechenden Sensor, einen Differenz-Transformator, einen auf Schwingkreisdämpfung ansprechenden Sensor , einen magnetostriktiven Sensor, einen optischen Sensor, wie Lichtschranke, Reflexschranke, Photowiderstand, Zeilensensor oder Bildsensor, einen auf Schall oder Ultraschall ansprechenden Laufzeitsensor oder einen Kontaktbahn-Sensor. Möglich wäre aber auch, daß der Winkelstellungsdetektor eines der folgenden Sensorelemente mit digitalem Ausgangssignal aufweist: Einen auf elektrische oder magnetische Felder ansprechenden Sensor, eine Feldplatte, einen Hallgenerator, einen auf magnetische Induktion ansprechenden Sensor, einen magnetostriktiven Sensor oder einen optischen Sensor, wie eine Lichtschranke oder eine Reflexschranke.

Die Erfindung wird nachfolgend an Ausführungsbeispielen anhand der Zeichnung näher erläutert. Es zeigen:

Fig. 1 eine schematische Darstellung eines erfindungsgemäß ausgestalteten Elektrofahrzeugs,

Fig. 2 den Winkelstellungsdetektor aus Fig. 1 in Draufsicht,

Fig. 3 eine gegenüber Fig. 1 etwas abgewandelte Ausführungsform des Winkelstellungsdetektors.

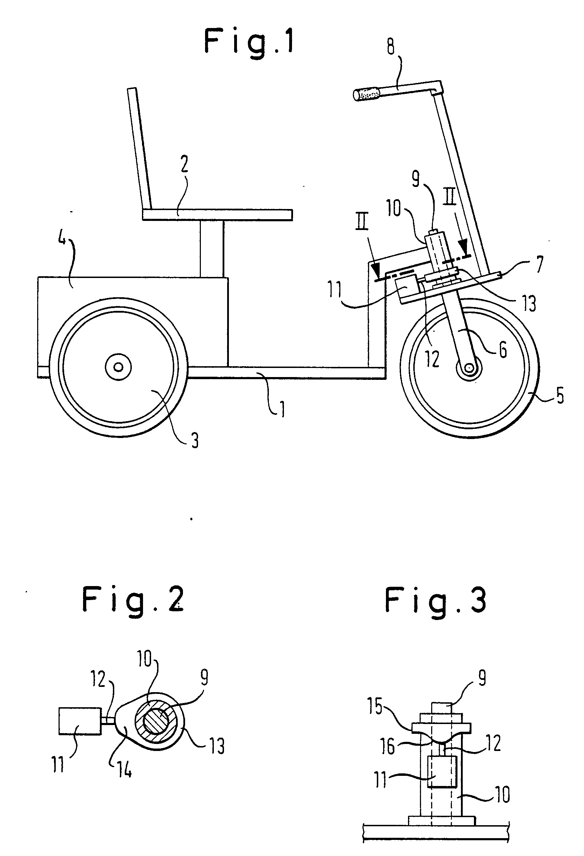

Das in Fig. 1 gezeigte Dreiradfahrzeug besitzt ein Fahrgestell 1 mit einer Sitzgruppe 2 und zwei Hinterrädern 3. Eine nur schematisch gezeigte elektrische Antriebseinheit 4 sitzt auf dem Fahrgestell 1 und wirkt auf die Hinterräder 3. Ein einzelnes Vorderrad 5 ist über eine Radgabel 6 aufgehängt und über eine Lenkanordnung 7 mit einer Lenkstange 8 lenkbar.

An der Gabel 6 ist eine Lenkachse 9 befestigt, die in einer Lagerhülse 10 des Fahrgestells 1 drehbar gelagert ist. Die Lenkachse 7 steht annähernd senkrecht, wenn auch mit einer leichten Neigung zum Fahrer hin. In Abwandlung von der dargestellten Ausführungsform wäre es natürlich auch denkbar, die Lagerhülse mit der Lenkanordnung und die Lenkachse mit dem Fahrgestell zu verbinden.

Um bei schnellen und insbesondere ruckartigen Lenkbewegungen die Gefahr des Kippens zu vermeiden, wird der Lenkwinkel jeweils gemessen und zur Geschwindigkeitsregulierung verwendet, in der Weise, daß mit zunehmendem Lenkwinkel die Fahrgeschwindigkeit gedrosselt wird. Dies ist bei einem Elektroantrieb für den Fachmann in einfacher Weise möglich, so daß eine entsprechende Schaltung nicht im einzelnen beschrieben zu werden braucht. Im vorliegenden Beispiel ist zur Feststellung des Lenkwinkels ein Potentiometer 11 vorgesehen, dessen Mittelabgriff über einen Abtaststift 12 verstellbar ist. Dieser in seiner Längsrichtung verstellbare Abtaststift 12 ist in Richtung auf eine Nockenscheibe 13 vorgespannt, die ihrerseits mit der Lagerhülse 8 fest verbunden ist. Das Potentiometer 11 dagegen ist mit der Lenkanordnung 7 bzw. der Lenkachse 9 fest verbunden und dreht sich somit mit der Lenkanordnung 7 um die Nockenscheibe 13 herum.

Die Anordnung von Potentiometer 11, Abtaststift 12 und Nockenscheibe 13 ist in Fig. 2 in Draufsicht noch einmal gezeigt. Bei der dargestellten Momentanposition zeigt der Nocken 14 der Nockenscheibe 13 mit seiner Spitze zum Abtaststift 12, d.h., daß der Abtaststift 12 bei dieser Stellung am weitesten in das Potentiometer 11 hineingedrückt wird. Der Abtaststift 12 ist beispielsweise mittels einer Feder zur Nockenscheibe 13 hin vorgespannt. Dieser dargestellten Position entspricht die Stellung des Vorderrades 5 bei Geradeausfahrt. Bei einer Schwenkung nach links oder rechts kommen die Seitenflanken des Nockens 14 mit dem Abtaststift 12 in Berührung, dieser wird also weiter aus dem Potentiometer heraus bewegt. Das dabei entstehende Signal wird in der Antriebseinrichtung 4 zu einer Verringerung der Fahrtgeschwindigkeit ausgewertet.

Fig. 3 zeigt eine etwas abgewandelte Ausführungsform der Abtasteinrichtung. Das Potentiometer 11 ist in diesem Fall so an der Lagerhülse 10 angeordnet, daß der Abtaststift 12 parallel zur Lenkachse 9 nach oben zeigt. Anstelle der Nockenscheibe 13 von Fig. 1 ist nunmehr ein kronenförmiges Nockenelement 15 mit nach unten zeigendem Nocken 16 vorgesehen.

Ein Vorteil der in Fig. 1 und 3 gezeigten Abtastanordnung besteht weiterhin darin, daß die Maximalgeschwindigkeit des Fahrzeugs durch eine Veränderung der Position des Potentiometers 11 eingestellt werden kann. Je näher das Potentiometer 11 an das Nockenelement 13 bzw. 15 herangerückt wird, um so geringer wird die Fahrtgeschwindigkeit auch bei Geradeausfahrt.

## Ansprüche

1. Elektrofahrzeug, insbesondere Dreiradroller, mit einem Fahrgestell (1), einer Antriebseinheit (4) und einem über eine Radgabel lenkbaren Vorderrad (5), wobei eine mit der Radgabel (6) verbundene Lenkachse (9) annähernd senkrecht stehend in einer mit dem Fahrgestell verbundenen Lagerhülse (10) gelagert ist, dadurch gekennzeichnet, daß im Bereich der Lagerhülse (10) und der Lenkachse (9) ein Winkelstellungsdetektor (11, 12, 13) angeordnet ist, der die Relativstellung zwischen Lenkachse (9) und Lagerhülse (10) mißt und dessen Ausgangssignal mit der Antriebseinheit (4) derart verknüpft ist, daß die Fahrgeschwindigkeit mit zunehmendem Lenkeinschlag vermindert wird.

2. Fahrzeug nach Anspruch 1, dadurch gekennzeichnet, daß der Winkelstellungsdetektor ein Potentiometer (11) enthält, dessen Mittelabgriff mittels eines durch eine Relativverdrehung der Lenkachse (9) betätigbaren Abtastelementes (12) verstellbar ist.

3. Fahrzeug nach Anspruch 2, dadurch gekennzeichnet, daß der Abgriff des Potentiometers (11) einen in Längsrichtung verstellbaren Abtaststift (12) aufweist, der mit einem relativ zu ihm verdrehbaren Kurvenelement (13; 15) zusammenwirkt.

4. Fahrzeug nach Anspruch 3, dadurch gekennzeichnet, daß das Kurvenelement eine Nockenscheibe (13) ist, deren Ebene senkrecht zur Lenkachse (9) steht, und daß der Abtaststift (12) senkrecht zur Lenkachse (9) verstellbar ist.

5. Fahrzeug nach Anspruch 3, dadurch gekennzeichnet, daß das Kurvenelement (15) kronenförmig eine im wesentlichen vertikal vorstehende Nokke (16) aufweist und daß der Abtaststift (12) parallel zur Lenkachse (9) verstellbar ist.

6. Fahrzeug nach einem der Ansprüche 3 bis 5, dadurch gekennzeichnet, daß der Abstand zwischen dem Potentiometer (11) und dem Kurvenelement (13; 15) zur Festlegung der Höchstgeschwindigkeit des Fahrzeugs verstellbar ist.

7. Fahrzeug nach Anspruch 2, dadurch gekennzeichnet, daß das Potentiometer ein Drehpotentiometer ist, dessen Drehachse als Abtastelement durch die Relativbewegung von Lenkachse und Lagerhülse verdrehbar ist.

8. Fahrzeug nach Anspruch 1, dadurch gekennzeichnet, daß der Winkelstellungsdetektor mindestens eines der folgenden Sensorelemente mit analogem Ausgangssignal aufweist:

a) Potentiometer,

b) piezoresistives Element,

c) zugempfindlicher Sensor (Saite),

d) auf elektrische Felder ansprechender Sensor,

e) kapazitiver Sensor,

f) auf magnetische Felder ansprechender Sensor,

g) Feldplatten-Sensor,

h) Hallgenerator,

i) auf magnetische Induktion ansprechender Sensor,

j) auf eine Variation der Induktivität ansprechender Sensor,

k) Differenz-Transformator,

l) auf Schwingkreisdämpfung ansprechender Sensor,

m) magnetostriktiver Sensor,

n) optischer Sensor, wie Lichtschranke oder Reflexschranke, Photowiderstand, Zeilensensor oder Bildsensor,

o) mit Schall oder Ultraschall arbeitender Laufzeitsensor oder

p) Kontaktbahn-Sensor.

9. Fahrzeug nach Anspruch 1, dadurch gekennzeichnet, daß der Winkelstellungsdetektor mindestens eines der folgenden Sensorelemente mit digitalem Ausgangssignal aufweist:

a) auf elektrische Felder ansprechender Sensor,

b) auf magnetische Felder ansprechender Sensor,

c) Feldplatte,

d) Hallgenerator,

e) auf magnetische Induktion ansprechender Sensor,

f) magnetostriktiver Sensor oder

g) optischer Sensor, wie Lichtschranke oder Reflexschranke.

# Fig.1

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | FR-A-2 370 679 (BENGEL) <br> * Seite 4, Zeilen 4-26; Anspruch 1 * <br> --- | 1 | A 61 G 5/04 <br> B 60 L 3/08 |
| A | DE-A-2 835 942 (ROBERT BOSCH) <br> * Seite 7, Zeile 26 - Seite 8, Zeile 13; Ansprüche 1,3 * <br> --- | 1 | |
| A | DE-A-2 906 372 (WILHELM MEYER) <br> * Anspruch 1 * <br> --- | 1 | |
| A | DE-A-3 217 841 (KUBATSCH & RUEHLMANN) <br> * Anspruch 1 * <br> --- | 1 | |
| A | US-A-4 570 739 (KRAMER) <br> * Figur 1 * <br> ----- | 1 | |

**RECHERCHIERTE SACHGEBIETE (Int. Cl.3)**

A 61 G   5/00
B 60 K   1/00
B 60 K  31/00
B 60 L   3/00
B 62 D   5/00

Der vorliegende Recherchenbericht wurde für alle Patentansprüche erstellt

| Recherchenort | Abschlußdatum der Recherche | Prüfer |
|---|---|---|
| BERLIN | 14-03-1989 | KRIEGER P O |